# EUROPÄISCHE PATENTANMELDUNG

(11) **EP 4 556 668 A1**
(43) Veröffentlichungstag der Anmeldung: **21.05.2025**
(21) Anmeldenummer: 24189617.4
(22) Anmeldetag: 19.07.2024
(51) Int. Cl.: E05F 15/73, B60R 25/20

(54) **STEUERUNGSSYSTEM ZUM BERÜHRUNGSLOSEN VERSTELLEN EINER FAHRZEUGKLAPPE ODER FAHRZEUGTÜR EINES KRAFTFAHRZEUGS SOWIE KRAFTFAHRZEUG**

(30) Priorität: 15.11.2023 DE 102023131767
(71) Anmelder: HUF Hülsbeck & Fürst GmbH & Co. KG, 42551 Velbert (DE)
(72) Erfinder: Wehner Dr., Philipp, 45879 Gelsenkirchen (DE); Schindler, Mirko, 42549 Velbert (DE); Leib, Steffen, 40885 Ratingen (DE)
(74) Vertreter: Zenz Patentanwälte Partnerschaft mbB

(57) **Zusammenfassung**

Die Erfindung betrifft ein Steuerungssystem (4) zum berührungslosen Verstellen einer Fahrzeugklappe (2) oder Fahrzeugtür (3) eines Kraftfahrzeugs (1).

Das System weist auf:
Einen Elektromotor (6),
einen Radarsensor (8), der beispielsweise im hinteren Stoßfänger (7) angeordnet ist, und
eine Steuerschaltung (12).

Die Steuerschaltung (12) ist eingerichtet, den Radarsensor (8) anzusteuern und dessen Signale zu verarbeiten.

In Abhängigkeit von erfassten Signalen einer innerhalb eines Erfassungsraums (9) von einem Bediener (5) ausgeführten Steuergeste (11) wird der Elektromotor (6) mit einem Auslösesignal angesteuert. Für die Funktionalität wichtig ist die Steuergeste in Relation zu der Referenzebene (13) und der Fahrtrichtung (14).

Die Erfindung betrifft außerdem ein Kraftfahrzeug.

## Beschreibung

Die Erfindung betrifft ein Steuerungssystem zum berührungslosen Verstellen einer Fahrzeugklappe oder Fahrzeugtür eines Kraftfahrzeugs. Die Erfindung betrifft ferner ein Kraftfahrzeug.

Die Funktionalität eines Steuerungssystems der hier vorliegenden Art basiert auf der Gewinnung von Sensordaten mit einem Radarsensor zur Erfassung einer Steuergeste, die in einem Erfassungsraum des Radarsensors ausgeübt wird. Die Geste wird sodann genutzt, um ein Auslösesignal zum Auslösen eines Verstellens einer Fahrzeugklappe oder Fahrzeugtür eines Kraftfahrzeugs auszugeben.

Das Prinzip der Radartechnologie ist bereits seit dem frühen 20. Jahrhundert bekannt. Die Radartechnologie nutzt die Idee, elektromagnetische Wellen auszusenden, daraufhin das Echo, also die reflektierten Wellen, auch als Radarantwort bezeichnet, der ausgesendeten elektromagnetischen Wellen zu empfangen, und sodann die empfangenen reflektierten Wellen nach bestimmten Kriterien auszuwerten. Je nach konkreter Umsetzung können mit der Nutzung von Radartechnologie verschiedene Informationen über Objekte gewonnen werden, an denen das Echo durch Reflektion der ausgesendeten Wellen entsteht. So kann mit Radartechnologie beispielsweise eine Ortung eines Objekts gelingen. Weiterhin können, beispielsweise unter Ausnutzung des Dopplereffekts, Informationen über die relative Bewegung zwischen Sensor und reflektierendem Objekt gewonnen werden. Auch Informationen über die absolute Geschwindigkeit des Objekts können abgeleitet werden, ebenso wie, alternativ oder zusätzlich, Informationen über Konturen des reflektierenden Objekts.

In der Automobiltechnologie gewinnt die Nutzung der Radartechnologie zunehmend an Bedeutung. Ein Hintergrund hierfür ist der Wunsch, die Autonomie von Fahrzeugen zu erhöhen, wodurch die Weiterentwicklung der in Fahrzeugen nutzbaren Radarsensoren betrieben wurde. Diese Entwicklung hat nicht zuletzt dazu geführt, dass Radarsensoren, die zur Ausrüstung beispielsweise von Fahrzeugen geeignet sind, als zum Einbau bereite Zukaufsysteme vergleichsweise kostengünstig verfügbar geworden sind. Dadurch ist beispielsweise eine Nutzung in einem breiten Anwendungsspektrum in Serienmodellen in wirtschaftlich sinnvoller Weise ermöglicht worden. Mit Hilfe von am Markt verfügbaren Radarsensoren können für den Betrieb eines Kraftfahrzeugs Objekterkennungen mit hohem Maß an lateraler Reichweite sowie lateraler wie angularer Auflösung gewonnen werden. Soweit erforderlich, ist auch eine gute Zeitauflösung der mit Radarsensoren erfassten Daten erreichbar.

Die Nutzung von Radarsensoren hat den Vorteil, dass aufgrund des grundsätzlichen Funktionsprinzips, eine Radarantwort zur Informationsgewinnung zu nutzen, Informationen erhalten werden können, die über die Ergebnisse hinausgehen, die mit Ultraschallsensoren gewonnen werden können. Gegenüber der Nutzung von Lidar-Systemen wiederum, die grundsätzlich auch zur Gewinnung von Sensordaten hoher Qualität geeignet sind, haben Radarsensoren den für die Nutzung im Massenmarkt oftmals entscheidenden Vorteil, dass sie kostengünstiger beschaffbar sind.

Bei der Nutzung der Radarsensorik für das Erkennen von Steuergesten ist wünschenswert, gewollte Bedienereignisse und Fehlbedienungen möglichst zuverlässig voneinander unterscheiden zu können. Vor diesem Hintergrund stellt sich die Aufgabe, einen Beitrag zu der Erhöhung der Zuverlässigkeit der Erkennung von Fehlbedienungen bereitzustellen.

Diese Aufgabe wird mit einem Steuerungssystem zum berührungslosen Verstellen einer Fahrzeugklappe oder einer Fahrzeugtür eines Kraftfahrzeugs mit den Merkmalen des Anspruchs 1 gelöst. Die Aufgabe wird außerdem mit einem Kraftfahrzeug mit den Merkmalen des Anspruchs 10 gelöst.

Es wird ein Steuerungssystem zum berührungslosen Verstellen einer Fahrzeugklappe oder einer Fahrzeugtür eines Kraftfahrzeugs vorgeschlagen.

Die Steuerungsanordnung weist einen mit der Fahrzeugklappe beziehungsweise Fahrzeugtür gekoppelten oder koppelbaren Elektromotor auf.

Die fahrzeugseitige Steuerungsanordnung umfasst ferner einen Radarsensor. Bei dem Radarsensor kann es sich beispielsweise um einen im Frequenzbereich um 24 GHz, beispielsweise zwischen 23 und 25 GHz, oder um einen im Frequenzbereich um 60 GHz, beispielsweise zwischen 59 und 61 GHz, oder um einen im Frequenzbereich zwischen 77 GHz und 81 GHz arbeitenden Radarsensor handeln. Die genannten Frequenzbereiche werden bei marktverfügbaren Radarsensoren häufig genutzt, was unter anderem regulatorische Gründe oder Gründe der elektromagnetischen Verträglichkeit hat. Radarsensoren in den genannten Frequenzbereichen werden aufgrund der Wellenlänge der ausgesandten elektromagnetischen Wellen im Englischen gelegentlich auch als *mmWave* bezeichnet.

Mit dem Radarsensor und dem Elektromotor ist erfindungsgemäß eine Steuerschaltung gekoppelt. Die Steuerschaltung ist eingerichtet, den Radarsensor anzusteuern und dessen Signale zu verarbeiten.

Die Steuerschaltung ist dazu eingerichtet, in Abhängigkeit von mit dem Radarsensor erfassten Signalen einer innerhalb eines Erfassungsraums des Radarsensors ausgeführten Steuergeste den Elektromotor mit einem Auslösesignal anzusteuern zum Verstellen der Fahrzeugklappe oder Fahrzeugtür des Kraftfahrzeugs.

Die Steuerschaltung ist zu diesem Zweck eingerichtet, die Signale des Radarsensors auszuwerten, um das Durchführen der Steuergeste in dem Erfassungsraum zu erkennen. Die Antwortsignale, die der Radarsensor aus den Reflexionen der ausgesandten Radarwellen enthält, vergleicht die Steuerschaltung mit einem Satz vorgegebener Steuergestenkriterien, also einem vorgegebenen Steuergestenkriterium oder mehreren vorgegebenen Steuergestenkriterien. Das Auslösesignal wird von der Steuerschaltung nur dann auszugeben, wenn die Steuergeste alle vorgegebenen Steuergestenkriterien oder eine geforderte Untermenge des Satzes vorgegebener Steuergestenkriterien erfüllt. Anderenfalls wird die Steuergeste als Fehlbedienung zu verworfen.

Es wird also zumindest vorgesehen, dass für die Ausgabe des Auslösesignals die notwendige Voraussetzung als erfüllt festgestellt wurde, dass die Steuergeste alle vorgegebenen Steuergestenkriterien des Satzes vorgegebener Steuergestenkriterien oder, in einer alternativen Ausführung, eine geforderte Untermenge des Satzes vorgegebener Steuergestenkriterien erfüllt. Optional kann für die mögliche Ausgabe eines Auslösesignals die zusätzliche Bedingung gefordert sein, dass weitere Erfüllungskriterien erfüllt worden sind, beispielsweise weitere Anforderungen an die Ausübung der Steuergeste und/oder andere beispielsweise an der Steuereinrichtung ausgeübte Bedienmuster, wie beispielsweise die Erkennung der Anwesenheit eines ID-Gebers in der Umgebung des Steuerungssystems. In einer speziellen Ausführung kann vorgesehen sein, dass die Feststellung, dass die Steuergeste alle vorgegebenen Steuergestenkriterien oder eine geforderte Untermenge des Satzes vorgegebener Steuergestenkriterien erfüllt hat, hinreichende Bedingung für die Ausgabe des Auslösesignals ist.

Erfindungsgemäß ist vorgesehen, dass eines der vorgegebenen Steuergestenkriterien als Ausrichtungskriterium betreffend die Bewegungsrichtung des die Steuergeste ausführenden Objekts bei Ausübung der Steuergeste ausgebildet ist. Das die Steuergeste ausführende Objekt, beispielsweise ein Fuß eines Bedieners, weist bei der Ausführung der Steuergeste eine bestimmte Orientierung auf. Beispielsweise kann, wenn es sich bei dem Objekt um einen Fuß handelt, eine Längsachse des Fußes eine bestimmte Orientierung bei der Ausübung der Steuergeste aufweisen. Erfindungsgemäß ist nun vorgesehen, die Richtung der Bewegung, welche das Objekt bei Ausübung der Steuergeste aufweist, als Steuergestenkriterium oder als Teil des Steuergestenkriteriums zu berücksichtigen. Beispielsweise kann das Ausrichtungskriterium die Ausrichtung des die Steuergeste ausführenden Objekts bei Treffen einer vorab definierten Ebene sein, die in dem Erfassungsraum des Radarsensors liegt. Moderne Radarsensoren sind in der Lage, neben einer Geschwindigkeit auch die Richtung der Bewegung zu messen und die Steuerschaltung ist in der Lage, aus dieser Richtung der Bewegung entsprechende Konsequenzen abzuleiten. Dadurch, dass in der erfindungsgemäß vorgesehenen Weise ermöglicht wird, die Auslösung eines Auslösesignals nur dann freizugegeben, wenn eines der Steuergestenkriterien, das als Ausrichtungskriterium ausgebildet ist, von der Steuergeste erfüllt wird, kann die Genauigkeit der Gestenerkennung erhöht werden und eine verbesserte Trennung von Fehlbedienungen gegenüber tatsächlich intendierten Bedienungen erfolgen.

Gemäß einer bevorzugten Weiterbildung kann vorgesehen sein, dass die Steuerschaltung eingerichtet ist, das Auslösesignal nur dann auszugeben, wenn die Steuergeste das Ausrichtungskriterium erfüllt, und anderenfalls die Steuergeste als Fehlbedienung zu verwerfen. In diesem Fall ist also vorgesehen, dass die Erfüllung des Ausrichtungskriteriums zumindest notwendige Bedingung für die Ausgabe des Auslösesignals ist. Die Berücksichtigung des Ausrichtungskriteriums führt dazu, dass selbst dann, wenn eine Steuergeste weitere Steuergestenkriterien umfasst, eine ansonsten korrekte Durchführung der Steuergeste dann nicht zur Auslösung des Auslösesignals führt, wenn alleine das Ausrichtungskriterium nicht erfüllt wird. Beispielsweise würde eine unbeabsichtigt ausgeübte Geste, die zufällig der Steuergeste entspricht und dabei alle Steuergestenkriterien, abgesehen vom Ausrichtungskriterium, erfüllt, aufgrund der erfindungsgemäß vorgesehenen Maßnahme der vorzusehenden Abprüfung der Ausrichtung des Objekts bei Ausführung der Steuergeste als Fehlbedienung identifiziert und kann sodann als solche verworfen werden.

In einer Überlegung kann vorgesehen sein, dass eine Anzahl von mehreren Ausrichtungskriterien vorgesehen ist, und dass die Steuerschaltung eingerichtet ist, das Auslösesignal nur dann auszugeben, wenn die Steuergeste alle Ausrichtungskriterien erfüllt, und anderenfalls die Steuergeste als Fehlbedienung zu verwerfen. Durch diese Variante kann die Sicherheit des Verfahrens erhöht werden.

In einer Überlegung kann vorgesehen sein, dass eine Anzahl von mehreren Ausrichtungskriterien vorgesehen ist, und dass die Steuerschaltung eingerichtet ist, das Auslösesignal nur dann auszugeben, wenn die Steuergeste zumindest eine Untermenge der Ausrichtungskriterien erfüllt, und anderenfalls die Steuergeste als Fehlbedienung zu verwerfen. Durch diese Variante kann ein zu häufiges Verwerfen als Fehlbedienung vermieden werden. Die zu erfüllende Untermenge kann eingerichtet sein als eine Mindestzahl von Ausrichtungskriterien, die ansonsten beliebig getroffen werden dürfen; alternativ kann die zu erfüllende Untermenge eingerichtet sein als eine von einer oder mehreren festgelegten zulässigen Kombinationen einer Untermenge der Ausrichtungskriterien.

Das Ausrichtungskriterium betreffend die Bewegungsrichtung kann beispielsweise eingestellt werden als das Kriterium, dass ein Ankunftswinkel des die Steuergeste ausführenden Objekts innerhalb eines Sollbereichs liegend erkannt wird. Der Ankunftswinkel kann beispielsweise der Ankunftswinkel relativ zu einer Referenzebene sein, die innerhalb des Erfassungsraums des Radarsensors liegt. Beispielsweise kann in einem Fall, dass das Steuerungssystem in einem Kraftfahrzeug angeordnet ist und der Radarsensor in einem hinteren Stoßfänger des Kraftfahrzeugs angeordnet ist um mit einer vom Stoßfänger in Bodenrichtung weisenden Orientierung des Erfassungsraums Kickgesten zu überwachen, vorgesehen sein, dass die Bewegungsrichtung des Objekts, beispielsweise eines menschlichen Fußes, in einer Längsrichtung des Kraftfahrzeugs, also der Richtung, in welcher das Kraftfahrzeug sich geradlinig bewegen kann, befindet oder von dieser Längsrichtung maximal um einen Abweichungswinkel +/- alpha abweicht, wobei alpha beispielsweise 45°, bevorzugt 20°, besonders bevorzugt 10° ist, dabei insbesondere eine symmetrische Abweichung des Ankunftswinkels bei Projektion auf eine zur Bewegungsebene des Fahrzeugs parallelen Ebene um den Winkel alpha den Sollbereich bilden kann. Es kann also vorgesehen sein, dass beispielsweise das Auslösesignal als Fehlbedienung verworfen wird, wenn das Objekt, welches die Steuergeste ausübt, mehr als den Winkel alpha von einer Ebene abweicht, welche die Symmetrieebene des Kraftfahrzeugs ist oder eine zu dieser Symmetrieebene parallele Ebene des Kraftfahrzeugs ist. Insbesondere kann vorgesehen sein, dass beispielsweise das Auslösesignal als Fehlbedienung verworfen wird, wenn das Objekt, welches die Steuergeste ausübt, bei Erreichen einer innerhalb des Erfassungsraums liegenden, in der Steuerschaltung definierten, Referenzebene, die von der geradlinigen Fahrtrichtung des Fahrzeugs senkrecht geschnitten wird, mehr als den Winkel alpha von einer Ebene abweicht, welche die Symmetrieebene des Kraftfahrzeugs ist oder eine zu dieser Symmetrieebene parallele Ebene des Kraftfahrzeugs ist.

Ferner kann gemäß einer besonders bevorzugten Weiterbildung vorgesehen sein, dass die Steuerschaltung eingerichtet ist, eine Ausgabe des Steuersignals für einen vorgegebenen Sperrzeitraum zu sperren, wenn die Steuergeste das Ausrichtungskriterium nicht erfüllt, also beispielsweise wenn der Ankunftwinkel nicht innerhalb des Sollbereichs, sondern außerhalb des Sollbereichs liegend erkannt wird. Das bedeutet, dass bei einer erkannten Geste, die als Fehlbedienung verworfen wurde, zunächst einmal die Erkennung weiterer Gesten als berechtigte Geste unterbleibt oder diese zumindest nicht zu einer Ausgabe des Auslösesignals führt. Diese Maßnahme geht von der Überlegung aus, dass eine Fehlbedienung in Konstellationen auftritt, in denen weitere Fehlbedienungen wahrscheinlich sind und in denen auch angenommen werden kann, dass eine zufällige Ausübung der korrekten Steuergeste inklusive des Erfüllens des Ausrichtungskriteriums überdurchschnittlich wahrscheinlich ist. Solche Situationen können beispielsweise vorliegen, wenn das Kraftfahrzeug in einer dichten Menschenmenge positioniert ist. Um zu vermeiden, dass in Situationen, in denen die zufällige Ausübung der korrekten Steuergeste überdurchschnittlich wahrscheinlich ist, eine Ausgabe des Auslösesignals ohne intendierten oder ohne berechtigten Zugang zum Kraftfahrzeug erfolgt, wurde die Maßnahme der temporären Sperrung während des vorgegebenen Sperrzeitraums erdacht, um den Anteil der Fehlauslösungen an den ausgegebenen Auslösesignalen zu reduzieren.

Wenn vom Ankunftwinkel die Rede ist, ist damit beispielsweise der Ankunftswinkel der Trajektorie des in der Steuerschaltung ermittelten geometrischen Schwerpunkts des die Steuergeste ausübenden Objekts gemeint.

Beispielsweise kann vorgesehen sein, dass der Sperrzeitraum größer als 1 Sekunde, bevorzugt größer als 5 Sekunden, besonders bevorzugt größer als 10 Sekunden ist.

Alternativ oder zusätzlich kann vorgesehen sein, dass der Sperrzeitraum kleiner als 60 Sekunden, bevorzugt kleiner als 30 Sekunden, besonders bevorzugt kleiner als 20 Sekunden ist.

Ferner kann gemäß einer besonders bevorzugten Weiterbildung alternativ oder zusätzlich vorgesehen sein, dass die Steuerschaltung eingerichtet ist, dass die Steuerschaltung eingerichtet ist, für einen vorgegebenen temporären Zeitraum denn Sollbereich für den Ankunftswinkel des die Steuergeste ausführenden Objekts zu verkleinern, wenn die Steuergeste das Ausrichtungskriterium nicht erfüllt. Wenn also beispielsweise regulär vorgesehen ist, dass das Auslösesignal als Fehlbedienung verworfen wird, wenn das Objekt, welches die Steuergeste ausübt, mehr als den Winkel alpha von einer Ebene abweicht, welche die Symmetrieebene des Kraftfahrzeugs ist oder eine zu dieser Symmetrieebene parallele Ebene des Kraftfahrzeugs ist, kann der Winkel alpha bei Erkennung einer Fehlbedienung in einen Winkel beta verändert werden, wobei beta kleiner ist als alpha. Dadurch wird erreicht, dass die Anforderungen an die Genauigkeit der auszuführenden Geste erhöht werden, sodass für den temporären Zeitraum unter Inkaufnahme eines geringeren Bedienkomforts das Risiko zufälliger oder böswillig ausgeübter Fehlauslösungen reduziert wird.

Besonders bevorzugt ist gemäß einer vorteilhaften Weiterbildung vorgesehen, dass ein weiteres der vorgegebenen Steuergestenkriterien als umstellbares Detektionskriterium ausgebildet ist. Das Detektionskriterium betrifft eine von dem Radarsensor detektierbare Eigenschaft einer Sensorgeste, also beispielsweise eine Geschwindigkeit des die Sensorgeste ausübenden Objekts oder die laterale Ausdehnung des die Sensorgeste ausübenden Objekts oder eine beim Ausüben der Sensorgeste durch das die Sensorgeste ausübende Objekt zurückgelegte Trajektorie.

Die Steuerschaltung ist in dieser Weiterbildung dazu eingerichtet, das Auslösesignal nur dann auszugeben, wenn die Steuergeste das Detektionskriterium erfüllt, und anderenfalls die Steuergeste als Fehlbedienung zu verwerfen.

Es kann also beispielsweise in einer Ausführung vorgesehen sein, dass notwendige Bedingung für die Ausgabe des Auslösesignals ist, dass die Steuergeste sowohl das Ausrichtungskriterium als auch das Detektionskriterium erfüllt. In einer speziellen Ausführung kann beispielsweise sogar vorgesehen sein, dass hinreichende Bedingung für die Ausgabe des Auslösesignals ist, dass die Steuergeste sowohl das Ausrichtungskriterium als auch das Detektionskriterium erfüllt.

Unabhängig von einer konkreten Ausführung kann das Detektionskriterium ein erstes Empfindlichkeitsmaß und ein zweites Empfindlichkeitsmaß einnehmen. Dabei ist vorgesehen, dass das Detektionskriterium regulär das erste Empfindlichkeitsmaß einnimmt, wobei aber das Detektionskriterium von dem ersten Empfindlichkeitsmaß in das zweite Empfindlichkeitsmaß umgestellt wird, wenn die Steuergeste das Ausrichtungskriterium nicht erfüllt, also beispielsweise, wenn der Ankunftwinkel außerhalb des Sollbereichs liegend erkannt wird. Das Detektionskriterium wird insbesondere von dem ersten Empfindlichkeitsmaß in das zweite Empfindlichkeitsmaß umgestellt wird, nachdem festgestellt wurde, dass die Steuergeste das Ausrichtungskriterium nicht erfüllt und somit als unmittelbare und unverzügliche Reaktion auf diese Feststellung. Durch die Möglichkeit der Veränderung des Empfindlichkeitsmaßes wird bei fachmännischer, beispielsweise empirischer, Findung eines zweiten Empfindlichkeitsmaßes erreicht, dass nach Verwerfen einer Steuergeste als Fehlbedienung bei weiteren ausgeübten Steuergesten eine erfolgreiche Ausgabe des Auslösesignals höhere Anforderungen an die Ausführung der Steuergeste stellt. Die Fachperson kann beispielsweise mittels empirischer Maßnahmen für das erste und zweite Empfindlichkeitsmaß Werte wählen, die für als realistisch angenommene Einsatzszenarien des Steuerungssystems als vorteilhaft ermittelt werden.

Beispielsweise kann das Detektionskriterium darin bestehend ausgebildet sein, dass eine Geschwindigkeit des die Steuergeste ausführenden Objekts innerhalb eines Sollbereichs liegend erkannt wird. Beispielsweise kann das Detektionskriterium darin bestehen, die Geschwindigkeit des die Steuergeste ausführenden Objekts innerhalb eines Sollbereichs liegend erkannt, wenn es eine vorab definierte Ebene erreicht, beispielsweise eine innerhalb des Erfassungsraums liegende, in der Steuerschaltung definierte, Referenzebene, die von der geradlinigen Fahrtrichtung des Fahrzeugs senkrecht geschnitten wird.

Entsprechend kann die Veränderung des Empfindlichkeitsmaßes des Detektionskriteriums beispielsweise wie folgt vorgesehen sein: das Steuerungssystem kann derart eingerichtet sein, dass in dem ersten Empfindlichkeitsmaß der Sollbereich zwischen v1_unter und v1_ober liegt, wohingegen in dem zweiten Empfindlichkeitsmaß der Sollbereich zwischen v2_unter und v2_ober liegt. Dabei kann beispielsweise v2_unter > v1_unter und/oder v2_ober < v1_ober festgelegt sein. In der vorstehenden Darstellung bezeichnen v1_unter, v2_unter, v1_ober und v2_ober jeweils skalare Betragswerte für Geschwindigkeiten in der selben Einheit, beispielsweise Meter/Sekunde. In dieser Ausführung bedeutet dies, dass nach einem eventuellen Erkennen des Ankunftswinkels außerhalb des Sollbereichs, mit der entsprechend erwirkten Folge des Verwerfens der Steuergeste als Fehlbedienung, das Intervall der zulässigen Geschwindigkeit des die Steuergeste ausführenden Objekts, beispielsweise die Geschwindigkeit bei Ankunft einer gedachten Ebene, insbesondere der oben beschriebenen Ebene, bezüglich welcher auch der Ankunftswinkel definiert wird, eingeengt wird, nämlich von dem ersten, standardmäßig geltenden, Intervall v1_unter bis v1_ober hin zu dem engeren Intervall v2_unter bis v2_ober. Diese Maßnahme führt dazu, dass im Nachgang zu einer als Fehlbedienung angenommenen Gestenerkennung die Toleranz des Systems bei Ausübung der Steuergeste und deren Erkennung als zugelassene Steuergeste verringert ist. Dadurch wird erreicht, dass die Wahrscheinlichkeit zufälliger Auslösungen, die nicht intendierte oder nicht berechtigte Auslösungen sind, für weitere, nachfolgende Versuche der Gestendetektionen verringert wird.

Beispielsweise kann vorgesehen sein, dass das Detektionskriterium, wenn es das zweite Empfindlichkeitsmaß einnimmt, es wieder zurück in das erste Empfindlichkeitsmaß umgestellt wird, nachdem ein vorgegebener ununterbrochener erkennungsloser Zeitraum vergangen ist, ohne dass ein Durchführen einer Steuergeste erkannt worden ist. Alternativ oder zusätzlich kann es in das erste Empfindlichkeitsmaß umgestellt werden, unmittelbar und bevorzugt unverzüglich, nachdem das Auslösesignal ausgegeben wurde. Das bedeutet, dass ein Kriterium definiert ist oder mehrere Kriterien definiert sind, von denen ausgehend sichergestellt ist, dass das standardmäßig vorgesehene erste Empfindlichkeitsmaß nach einem gewissen Zeitablauf auch wieder eingestellt wird, wobei entweder der Zeitablauf oder das Erfüllen der korrekten Geste auch bei der höheren Genauigkeitsanforderung oder eine Kombination von beidem oder eine Kombination von einem der beiden oder von beiden mit noch weiteren Bedingungen vorgesehen sein kann. Es ist somit sichergestellt, dass die Einengung des Empfindlichkeitsmaßes auf eine anspruchsvollere Auswertung nur temporär stattfindet und begrenzt ist auf Konstellationen, in denen es beispielsweise zur Sicherstellung der Betriebssicherheit als erforderlich angesehen wird; sobald diese Konstellation als beendet angesehen wird, wird der Temporär vorliegende Zustand wieder auf die Standardeinstellung zurückgestellt, was dem Bedienkomfort zuträglich ist.

Ein weiterer Gedanke der Erfindung betrifft ein Kraftfahrzeug, welches mit einem Steuerungssystem der eingangs beschriebenen Weise oder einer seiner Weiterbildungen ausgestattet ist.

Insbesondere kann eine Ausführung vorgesehen sein, gemäß welcher der Radarsensor in einem hinteren Stoßfänger des Kraftfahrzeugs angeordnet ist, wobei der Radarsensor einen Erfassungsraum abdeckt, der vom Stoßfänger in Bodenrichtung weisend orientiert ist.

Weitere Einzelheiten, Merkmale und Vorteile des erfindungsgemäßen Steuerungssystems ergeben sich aus der nachfolgenden Beschreibung in Zusammenhang mit den Figuren, in denen beispielhaft Ausführungsbeispiele der Erfindung dargestellt sind.

Es versteht sich, dass die vorstehend genannten wie auch die nachfolgend erläuterten Merkmale nicht nur in der jeweils angegebenen Kombination, sondern auch in anderen Kombinationen oder in Alleinstellung verwendbar sind. Es zeigen:
Fig. 1: eine Grundkonstellation eines Kraftfahrzeugs mit einem erfindungsgemäßen Ausführungsbeispiel;
Fig. 2: ein Ablaufdiagramm von Schrittfolgen zur Verdeutlichung eines ersten Ausführungsbeispiels eines erfindungsgemäßen Steuerungssystems;
Fig. 3: ein Ablaufdiagramm von Schrittfolgen zur Verdeutlichung eines zweiten Ausführungsbeispiels eines erfindungsgemäßen Steuerungssystems.

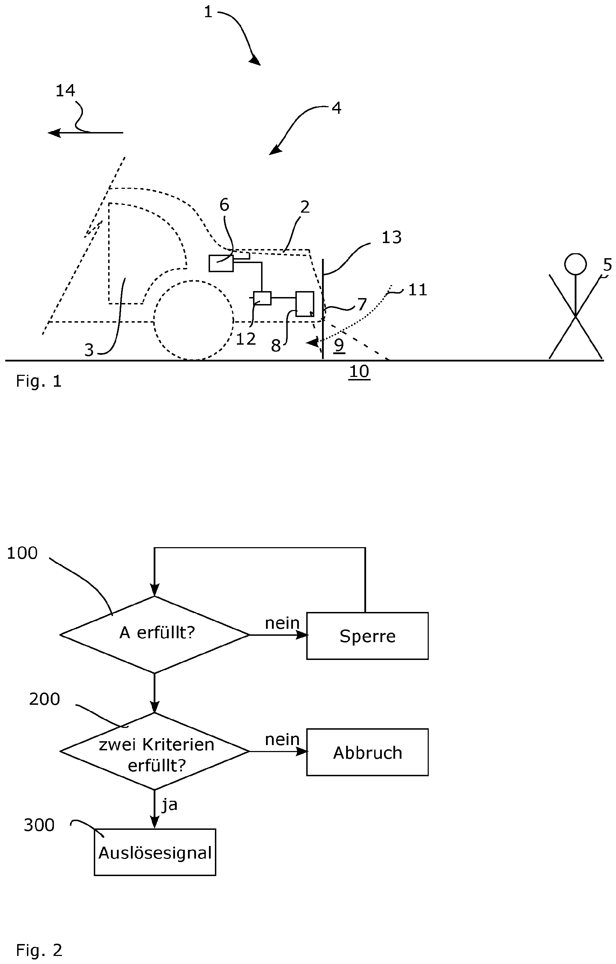

In Fig. 1 ist ein Kraftfahrzeug 1 gezeigt, welches ein erfindungsgemäßes Steuerungssystem 4 aufweist. Das Steuerungssystem 4 ist eingerichtet, eine Fahrzeugklappe 2, beispielsweise die Kofferraumklappe, oder eine Fahrzeugtür 3 des Kraftfahrzeugs berührungslos zu verstellen.

Um für das berührungslose Verstellen eine geeignete Sensorik bereitzustellen, weist das Steuerungssystem einen Radarsensor 8 auf, der in einem hinteren Stoßfänger 7 des Kraftfahrzeugs 1 angeordnet ist, und zwar mit einer vom Stoßfänger in Bodenrichtung und vom Kraftfahrzeug antiparallel zur Fahrtrichtung weisenden Orientierung des Erfassungsraums 9, sodass der Erfassungsraum von hinter dem Fahrzeug zu der Fahrzeugklappe gerichteten Bediener 5 mittels als Kickbewegung 11 ausgeübter Steuergeste durchtretbar ist.

Das Steuerungssystem 4 weist ferner einen Elektromotor 6 auf, der mit der Fahrzeugklappe 2 oder Fahrzeugtür 3 koppelbar oder gekoppelt ist, um die Verstellung der Fahrzeugklappe 2 oder Fahrzeugtür 3 bei Ausgabe eines Auslösesignals zu veranlassen.

Mit dem Radarsensor 8 und mit dem Elektromotor 6 ist eine Steuerschaltung 12, 13 gekoppelt. Die Steuerschaltung ist eingerichtet, den Radarsensor 8 anzusteuern und dessen Signale zu verarbeiten. In Abhängigkeit von mit dem Radarsensor 8 erfassten Signalen einer innerhalb des Erfassungsraums 9 des Radarsensors 8 ausgeführten Steuergeste 11 eines Bedieners 5 steuert die Steuerschaltung 12 den Elektromotor mit dem Auslösesignal an, woraufhin die Verstellung der Fahrzeugklappe 2 beziehungsweise Fahrzeugtür 3 des Kraftfahrzeugs 1 veranlasst wird.

Die Steuerschaltung 12, bei der es sich beispielsweise um einen Mikrocontroller oder um einen Teil der zentralen Fahrzeugsteuerung handeln kann, ist eingerichtet, von dem Radarsensor 8 erfasste Radarsignale auszuwerten, um das Durchführen der Steuergeste in dem Erfassungsraum zu erkennen.

In der Steuerschaltung 8 ist eine innerhalb des Erfassungsraums liegende, das heißt: diese zumindest abschnittsweise durchlaufende, Referenzebene 13 hinterlegt, die von der geradlinigen Fahrtrichtung 14 des Fahrzeugs senkrecht geschnitten wird, und gegenüber welcher beispielsweise ein Ausrichtungskriterium und/oder ein Detektionskriterium abgeprüft werden kann. Es kann vorgesehen sein, dass das Abprüfen des Ausrichtungskriteriums und/oder des Detektionskriteriums erfolgt, wenn das die Steuergeste ausübende Objekt die Referenzebene 13 erreicht.

Eine mögliche Durchführung des Verfahrens ist in Fig. 2 schematisch dargestellt. Die Steuerschaltung vergleicht in einem ersten Schritt die Steuergeste, die durch Messparameter repräsentiert wird, mit einem Satz vorgegebener Steuergestenkriterien. Dabei ist vorgegeben, dass das Auslösesignal nur dann ausgegeben wird, wenn die Steuergeste eine geforderte Untermenge von einer vorgegebenen Anzahl, in dem gezeigten Beispiel zwei, der vorgegebenen Steuergestenkriterien erfüllt, und dass anderenfalls die Steuergeste als Fehlbedienung verworfen wird. In dem gezeigten Beispiel ist als Spezialfall auch festgelegt, dass das Auslösesignal genau dann ausgegeben wird, wenn die Steuergeste eine geforderte Untermenge von einer vorgegebenen Anzahl, in dem gezeigten Beispiel zwei, der vorgegebenen Steuergestenkriterien erfüllt, wobei die geforderte Untermenge der vorgegebenen Anzahl im gezeigten Beispiel nicht beliebig ist, sondern sie eine weitere Bedingung erfüllen muss:
Eines der vorgegebenen Steuergestenkriterien ist als Ausrichtungskriterium A betreffend die Bewegungsrichtung des die Steuergeste ausführenden Objekts bei Ausübung der Steuergeste ausgebildet. Die Steuerschaltung ist eingerichtet, das Auslösesignal nur dann auszugeben (notwendige Bedingung), wenn die Steuergeste das Ausrichtungskriterium erfüllt, und anderenfalls die Steuergeste als Fehlbedienung zu verwerfen.

Das Ausrichtungskriterium betreffend die Bewegungsrichtung besteht im gezeigten Beispiel in der Abprüfung, ob ein Ankunftswinkel des die Steuergeste ausführenden Objekts innerhalb eines Sollbereichs liegend erkannt wird. Diese Abprüfung erfolgt in Schritt 100. Im Fall, dass das Kriterium Bedingung A erfüllt ist, erfolgt in Schritt 200 die Abprüfung, ob wenigstens zwei der Kriterien durch die Steuergeste erfüllt werden. Ist dies der Fall, dann erfolgt in Schritt 300 die Ausgabe des Auslösesignals.

In dem Fall, dass in dem Schritt 100 festgestellt wird, dass der Ankunftwinkel außerhalb des Sollbereichs liegend erkannt wird, wird hingegen die Ausgabe des Steuersignals für einen vorgegebenen Sperrzeitraum t_S gesperrt.

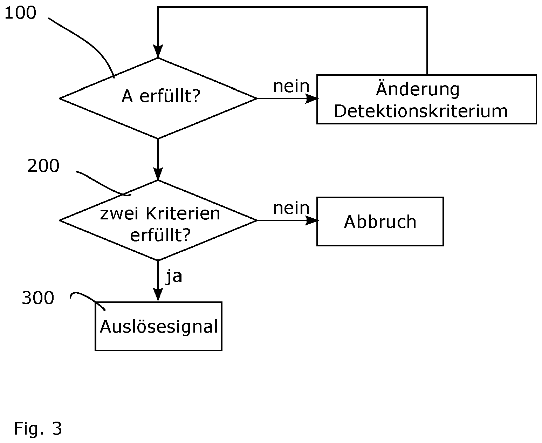

In Fig. 3 ist eine weitere Ausführung dargestellt. Die Ausführung der Fig. 3 sieht vor, dass eines der vorgegebenen Steuergestenkriterien, bevorzugt dabei nicht das Ausrichtungskriterium, als umstellbares Detektionskriterium ausgebildet ist. Das Detektionskriterium weist ein erstes Empfindlichkeitsmaß und ein zweites Empfindlichkeitsmaß auf. Wenn das Detektionskriterium das erste Empfindlichkeitsmaß einnimmt, wird das Detektionskriterium von dem ersten Empfindlichkeitsmaß in das zweite Empfindlichkeitsmaß umgestellt, wenn die Steuergeste das Ausrichtungskriterium nicht erfüllt, also im vorliegenden Beispiel: der Ankunftwinkel außerhalb des Sollbereichs liegend erkannt wird.

Wie bei dem in Fig. 2 beschriebenen Beispiel, besteht das Ausrichtungskriterium betreffend die Bewegungsrichtung im gezeigten Beispiel in der Abprüfung, ob ein Ankunftswinkel des die Steuergeste ausführenden Objekts innerhalb eines Sollbereichs liegend erkannt wird. Diese Abprüfung erfolgt in Schritt 100. Im Fall, dass die Bedingung A erfüllt wird, erfolgt in Schritt 200 die Abprüfung, ob neben dem Kriterium A das Detektionskriterium als zweites Kriterium erfüllt wird. Ist dies der Fall, dann erfolgt in Schritt 300 die Ausgabe des Auslösesignals.

Wenn in Schritt 100 die Abprüfung ergibt, dass die Steuergeste das Ausrichtungskriterium nicht erfüllt, also der Ankunftwinkel außerhalb des Sollbereichs liegt, dann wird das Detektionskriterium von dem ersten Empfindlichkeitsmaß in das zweite Empfindlichkeitsmaß umgestellt.

Im gezeigten Beispiel ist das Detektionskriterium darin definiert, dass eine Geschwindigkeit des die Steuergeste ausführenden Objekts innerhalb eines Sollbereichs liegend erkannt wird, das heißt: Wenn die Geschwindigkeit außerhalb dieses Sollbereichs liegt, also kleiner oder größer ist, wird innerhalb der Steuerschaltung für die Abprüfung des Detektionskriteriums von dem ersten Empfindlichkeitsmaß in das zweite Empfindlichkeitsmaß umgeschaltet.

Das erste Empfindlichkeitsmaß umfasst einen Sollbereich [v1_unter;v1_ober] und das zweite Empfindlichkeitsmaß einen Sollbereich [v2_unter;v2_ober], wobei das zweite Intervall in diesem Beispiel vollständig innerhalb des ersten Intervalls liegt; durch die Umstellung des Empfindlichkeitsmaßes ergibt sich der Effekt, dass für einen erneuten Versuch, eine Ausgabe des Auslösesignals mittels Ausübung der Steuergeste zu bewirken, höhere Anforderungen an die Genauigkeit der Steuergeste gestellt werden, da die Bandbreite der zur Erfüllung zulässigen Geschwindigkeiten enger geworden ist.

Nachdem ein vorgegebener ununterbrochener erkennungsloser Zeitraum vergangen ist, ohne dass ein Durchführen einer Steuergeste erkannt worden ist, kann wieder in das ursprüngliche Empfindlichkeitsmaß umgestellt werden, beispielsweise nach einem Zeitraum von wenigstens 5 Minuten, wobei auch längere Zeiträume vorgesehen sein können, beispielsweise ein Zeitraum von wenigstens 6 Stunden. Alternativ oder zusätzlich kann vorgesehen sein, dass wieder in das erste Empfindlichkeitsmaß umgestellt wird, unmittelbar, nachdem das Auslösesignal ausgegeben wurde und in Reaktion darauf, da in einer solchen Situation eine Steuergeste unter den anspruchsvolleren Bedingungen des zweiten Empfindlichkeitsmaßes als zulässig erkannt wurde, sodass für weitere Auslösungen wieder die standardmäßig eingestellten Anforderungen des zweiten Empfindlichkeitsmaßes als ausreichend angesehen werden können.

## Patentansprüche

1. Steuerungssystem (4) zum berührungslosen Verstellen einer Fahrzeugklappe (2) oder Fahrzeugtür (3) eines Kraftfahrzeugs (1),
aufweisend einen mit der Fahrzeugklappe (2) oder Fahrzeugtür (3) koppelbaren oder gekoppelten Elektromotor,
einen Radarsensor (8),
eine mit dem Radarsensor (8) und mit dem Elektromotor (6) gekoppelte Steuerschaltung (12),
wobei die Steuerschaltung (12) eingerichtet ist, den Radarsensor (8) anzusteuern und dessen Signale zu verarbeiten,
wobei die Steuerschaltung (12) eingerichtet ist, in Abhängigkeit von mit dem Radarsensor (8) erfassten Signalen einer innerhalb eines Erfassungsraums (9) des Radarsensors (8) ausgeführten Steuergeste (11) den Elektromotor (6) mit einem Auslösesignal anzusteuern zum Verstellen der Fahrzeugklappe (2) oder Fahrzeugtür (3) des Kraftfahrzeugs (1),
wobei die Steuerschaltung (12) eingerichtet ist,
die Signale des Radarsensors (8) auszuwerten, um das Durchführen der Steuergeste (11) in dem Erfassungsraum (9) zu erkennen, die Steuergeste (11) mit einem Satz vorgegebener Steuergestenkriterien zu vergleichen, und das Auslösesignal nur dann auszugeben, wenn die Steuergeste (11) alle vorgegebenen Steuergestenkriterien oder eine geforderte Untermenge des Satzes vorgegebener Steuergestenkriterien erfüllt, und anderenfalls die Steuergeste als Fehlbedienung zu verwerfen,
wobei eines der vorgegebenen Steuergestenkriterien als Ausrichtungskriterium betreffend die Bewegungsrichtung des die Steuergeste (11) ausführenden Objekts bei Ausübung der Steuergeste (11) ausgebildet ist.

2. Steuerungssystem (4) nach Anspruch 1,
wobei die Steuerschaltung (12) eingerichtet ist,
das Auslösesignal nur dann auszugeben, wenn die Steuergeste (11) das Ausrichtungskriterium erfüllt, und anderenfalls die Steuergeste (11) als Fehlbedienung zu verwerfen.

3. Steuerungssystem (4) nach Anspruch 1 oder nach Anspruch 2,
wobei das Ausrichtungskriterium betreffend die Bewegungsrichtung darin besteht, dass ein Ankunftswinkel des die Steuergeste (11) ausführenden Objekts innerhalb eines Sollbereichs liegend erkannt wird.

4. Steuerungssystem (4) nach Anspruch 2 oder nach Anspruch 3, **dadurch gekennzeichnet,**
**dass** die Steuerschaltung (12) eingerichtet ist, eine Ausgabe des Steuersignals für einen vorgegebenen Sperrzeitraum zu sperren, wenn die Steuergeste das Ausrichtungskriterium nicht erfüllt und/oder
**dass** die Steuerschaltung (12) eingerichtet ist, für einen vorgegebenen temporären Zeitraum denn Sollbereich für den Ankunftswinkel des die Steuergeste (11) ausführenden Objekts zu verkleinern, wenn die Steuergeste (11) das Ausrichtungskriterium nicht erfüllt.

5. Steuerungssystem (4) nach Anspruch 4, **dadurch gekennzeichnet,**
**dass** der Sperrzeitraum größer als 1 Sekunde, bevorzugt größer als 5 Sekunden, besonders bevorzugt größer als 10 Sekunden ist, und/oder
**dass** der Sperrzeitraum kleiner als 60 Sekunden, bevorzugt kleiner als 30 Sekunden, besonders bevorzugt kleiner als 20 Sekunden ist.

6. Steuerungssystem (4) nach einem der Ansprüche 2 bis 5, **dadurch gekennzeichnet, dass**
ein weiteres der vorgegebenen Steuergestenkriterien als umstellbares Detektionskriterium ausgebildet ist,
wobei die Steuerschaltung eingerichtet ist, das Auslösesignal nur dann auszugeben, wenn die Steuergeste das Detektionskriterium erfüllt, und anderenfalls die Steuergeste als Fehlbedienung zu verwerfen,
wobei das Detektionskriterium ein erstes Empfindlichkeitsmaß und ein zweites Empfindlichkeitsmaß einnehmen kann, wobei, wenn das Detektionskriterium das erste Empfindlichkeitsmaß einnimmt, das Detektionskriterium von dem ersten Empfindlichkeitsmaß in das zweite Empfindlichkeitsmaß umgestellt wird, wenn die Steuergeste das Ausrichtungskriterium nicht erfüllt.

7. Steuerungssystem (4) nach Anspruch 6,
**dadurch gekennzeichnet, dass** das Detektionskriterium darin besteht, dass eine Geschwindigkeit des die Steuergeste ausführenden Objekts innerhalb eines Sollbereichs liegend erkannt wird.

8. Steuerungssystem (4) nach Anspruch 7,
**dadurch gekennzeichnet,**
**dass** in dem ersten Empfindlichkeitsmaß der Sollbereich zwischen v1_unter und v1_ober liegt,
**dass** in dem zweiten Empfindlichkeitsmaß der Sollbereich zwischen v2_unter und v2_ober liegt,
wobei v2_unter > v1_unter und/oder
wobei v2_ober < v1_ober.

9. Steuerungssystem (4) nach einem der Ansprüche 6 bis 8, **dadurch gekennzeichnet, dass**
das Detektionskriterium, wenn es das zweite Empfindlichkeitsmaß einnimmt,
es in das erste Empfindlichkeitsmaß umgestellt wird, nachdem ein vorgegebener ununterbrochener erkennungsloser Zeitraum vergangen ist, ohne dass ein Durchführen einer Steuergeste erkannt worden ist, und/oder
es in das erste Empfindlichkeitsmaß umgestellt wird, unmittelbar, nachdem das Auslösesignal ausgegeben wurde.

10. Kraftfahrzeug (1), aufweisend ein Steuerungssystem (4) nach einem der vorhergehenden Ansprüche.

11. Kraftfahrzeug (1) nach Anspruch 10, wobei der Radarsensor (8) in einem hinteren Stoßfänger (7) des Kraftfahrzeugs (1) angeordnet ist mit einer vom Stoßfänger (7) in Bodenrichtung weisenden Orientierung des Erfassungsraums (9) .
